# EUROPÄISCHE PATENTSCHRIFT

(11) **EP 1 806 520 B1**
(45) Veröffentlichungstag und Bekanntmachung des Hinweises auf die Patenterteilung: **11.03.2009**
(21) Anmeldenummer: 06027042.8
(22) Anmeldetag: 29.12.2006
(51) Int. Cl.: F16H 57/08

(54) **Planetengetriebe**
Planetary gear
Engrenage planétaire

(30) Priorität: 04.01.2006 DE 102006000760
(43) Veröffentlichungstag der Anmeldung: 11.07.2007
(73) Patentinhaber: Hofacker, Friedrich, 70734 Fellbach (DE)
(72) Erfinder: Hofacker, Friedrich, 70734 Fellbach (DE)
(74) Vertreter: Wolf, Eckhard

(56) Entgegenhaltungen:
- DE-A1- 2 024 469
- DE-A1- 10 334 459
- DE-A1- 19 544 197

## Beschreibung

Die Erfindung betrifft ein Planetengetriebe, mit einem auf einer Antriebswelle angeordneten, außenverzahnten Sonnenrad, mit mehreren, mit ihren Achsen auf einem Kreis um das Sonnenrad angeordneten, außenverzahnten und in einem Lagerkäfig um ihre Achsen drehbar gelagerten Planentenrädem, und mit einem koaxial zu dem Sonnenrad angeordneten, innenverzahnten und das Sonnenrad sowie die Planetenräder umschließenden Hohlrad, wobei die Verzahnung der Planetenräder sowohl mit der Verzahnung des Sonnenrads als auch mit der Verzahnung des Hohlrads in kämmendem Eingriff steht wobei der Lagerkäfig zwei geformte, Lagerebenen für die Planetenräder definierende Blechstanzteile umfasst, zwischen denen Abstandskörper angeordnet sind. Ein derartiges Getriebe ist aus der DE-A 2024469 bekannt.

Planetengetriebe bieten gegenüber Getrieben herkömmlicher Bauart eine Reihe von Vorteilen. So lassen sie sich einfacher schalten, da kein Gleichlauf hergestellt werden muss und die Gänge ohne Kraftflussunterbrechung geschaltet werden können. Die Zahnflankenbelastung ist geringer, da das Drehmoment über mehrere Eingriffe übertragen wird. Außerdem verfügen sie über eine größere Laufruhe, da sich ständig alle Zahnräder im Eingriff befinden, und schließlich ist ihr Platzbedarf geringer als der leistungsgleicher anderer mechanischer Getriebe.

Hinsichtlich der Lager und der Planetenräder in dem Lagerkäfig unterscheidet man zwei Möglichkeiten. Entweder sind an den beiden Stirnseiten eines jeden Planetenrads zwei Lagerzapfen fest angebracht, die sich in den Lagerbohrungen des Lagerkäfigs drehen, oder die Planetenräder sind axial durchbohrt und drehen sich auf Lagerbolzen, die fest in die Lagerbohrungen des Lagerkäfigs eingeschlagen sind. Da die sich drehenden Planetenräder mit ihren Stirnseiten direkt oder über zwischengelegte Anlaufscheiben an den benachbarten Innenflächen des Lagerkäfigs anlaufen, ist dort eine entsprechende Oberfläche notwendig. Zur besseren Bearbeitung der Anlaufbereiche des Lagerkäfigs erfolgt in der Regel eine konstruktive Trennung des Lagerkäfigs in eine Lagerbasis und einen Lagerdeckel. Die Lagerbasis und der Lagerdeckel müssen bei der Montage des Planetengetriebes wieder miteinander verbunden werden. Die Lagerbasis und der Lagerdeckel definieren zwei parallel zueinander angeordnete Lagerebenen, die durch an dem Lagerdeckel angeordnete Abstandssäulen im Abstand zueinander gehalten werden. Für einen störungsfreien Betrieb und eine lange Lebensdauer des Planetengetriebes ist es wichtig, dass die Lagerebenen im axialen Abstand, in radialer Position und in Verdrehposition fest miteinander verbunden sind. Unter einer geforderten Belastung darf keine wesentliche Abweichung gegenüber dem Ausgangszustand der drei Fixierrichtungen auftreten. Anderenfalls wälzen sich die Zahnflanken der miteinander kämmenden Räder auf nicht gewünschten Eingriffen. Es tritt dann ein höherer Verschleiß, ein verminderter Wirkungsgrad, eine höhere Geräuschemission sowie eine höhere Betriebstemperatur auf. Der Lagerdeckel liegt innerhalb des durch das Hohlrad bestimmten Bauraums und ist daher im Außendurchmesser durch den Innendurchmesser des Hohlrads begrenzt. Die Lagerbasis ist seitlich neben dem Hohlrad angeordnet und unterliegt daher in radialer Richtung keiner zwingenden Begrenzung. Der Abtrieb des Planetentriebs ist daher nicht mit der Lagerbasis des Lagerkäfigs verbunden.

Zur konstruktiven Vereinfachung (Baukastenprinzip) ist für mehrere Planetenrad-Übersetzungen ein bestimmter Bauraum für verschiedene Sonnenrad, Planetenrad- und Hohlrad-Größen bereitzustellen. Die Abstandssäulen des Lagerkäfigs können nur in dem Freiraum zwischen dem in der Mitte des Planetentriebs liegenden Sonnenrad, dem außen liegenden Hohlrad und in Umfangsrichtung des Planetentriebs zwischen den Planetenrädern angeordnet werden. Diese Einschränkungen begrenzen den maximalen Querschnitt der Abstandssäulen, welcher die mechanische Stabilität des Lagerkäfigs entscheidend prägt. Bei den bekannten Planetengetrieben der eingangs genannten Art sind die Abstandssäulen an dem Lagerdeckel des Lagerkäfigs fest angeformt. Das freie Säulenende liegt an der Lagerbasis an. Die Verbindung zwischen der Lagerbasis und dem Lagerdeckel erfolgt mittels Schraub-Passstiften, welche in entsprechende Gewindebohrungen in den Abstandssäulen eingeschraubt werden. Hierdurch wird zum einen der tragende Querschnitt der Abstandssäulen verringert. Zum anderen findet die Verbindung zwischen Lagerbasis und Lagerdeckel in einem radial relativ weit innen liegenden Bereich statt. Insgesamt verfügt die Verbindung damit über eine oftmals unzureichende mechanische Stabilität, so dass die genannten Relativverschiebungen zwischen Lagerbasis und Lagerdeckel auftreten können. Zudem müssen die Lagerbasis und der Lagerdeckel für das Bohren der Passgewinde in den Abstandssäulen und das Bohren der Planetenrad-Lagerbohrungen zusammengefügt werden, zum Einbau der Planetenräder aber wieder voneinander getrennt und für den Endzustand abermals zusammengefügt werden. Neben einem erhöhten Fertigungs- und Montageaufwand können dabei wiederum Relativverschiebungen zwischen Lagerbasis und Lagerdeckel auftreten.

Ausgehend hiervon besteht die Aufgabe der vorliegenden Erfindung darin, ein Planetengetriebe der eingangs genannten Art zu schaffen, das zum einen kostengünstig herzustellen ist und bei dem zum anderen der Kraftabtrieb nicht zu einer Verzerrung des Gehäuses führt.

Zur Lösung dieser Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Gemäß der Erfindung ist vorgesehen, dass ein das Hohlrad radial übergreifender Ringkörper für den Abtrieb an den radial außen liegenden Bereichen der Abstandskörper im Bereich der Längsmittelebene zwischen den Lagerebenen und/oder an in den Bereich der Längsmittelebene ragende Partien der Blechstanzteile befestigt ist.

In bevorzugter Ausgestaltung der Erfindung ist vorgesehen, dass die Abstandskörper in Umfangsrichtung in gleichen Winkelabständen angeordnet sind.

In weiter bevorzugter Ausgestaltung der Erfindung ist vorgesehen, dass die Abstandskörper als flache Plattenelemente oder als Säulen mit annähernd Y-förmigen Querschnitt ausgebildet sind.

In weiter bevorzugter Ausgestaltung der Erfindung ist vorgesehen, dass als Säulen mit annähernd Y-förmigen Querschnitt ausgebildete Abstandskörper im Laufbereich der Planetenräder seitliche Ausnehmungen aufweisen.

In weiter bevorzugter Ausgestaltung der Erfindung ist vorgesehen, dass der das Hohlrad radial übergreifende Ringkörper für den Abtrieb an den radial außen liegenden Bereichen der Abstandskörper und/oder den in den Bereich der Längsmittelebene ragenden Partien der Blechstanzteile angeschweißt ist.

In weiter bevorzugter Ausgestaltung der Erfindung ist vorgesehen, dass die Blechstanzteile und die Abstandskörper fest miteinander verbunden, vorzugsweise miteinander verschweißt, verschraubt, vernietet oder verklebt sind.

In weiter bevorzugter Ausgestaltung der Erfindung ist vorgesehen, dass der Ringkörper als geformtes Blechstanzteil ausgebildet ist.

In weiter bevorzugter Ausgestaltung der Erfindung ist vorgesehen, dass der Ringkörper eine der Anzahl der Abstandskörper entsprechende Anzahl an radial und axial nach innen ragende Verbindungsarme aufweist, deren freie Enden mit den Abstandskörpern und/oder den in den Bereich der Längsmittelebene ragenden Partien der Blechstanzteile verbunden sind.

In alternativer Weiterbildung der Erfindung ist vorgesehen, dass der Ringkörper mindestens einen Profilring aufweist und das an einer im Wesentlichen axial ausgerichteten Fläche des Profilrings eine der Anzahl der Abstandskörper entsprechende Anzahl von als Blechformteile ausgebildeten Verbindungsarmen befestigt ist, deren freie Enden mit den Abstandskörpern verbunden sind.

In weiter bevorzugter Ausgestaltung der Erfindung ist vorgesehen, dass mindestens eines der den Lagerkäfig bildenden Blechstanzteile eine zentrale Öffnung für das Einführen des Sonnenrads aufweist.

In weiter bevorzugter Ausgestaltung der Erfindung ist vorgesehen, dass eine Begrenzungsscheibe für das Sonnenrad mit einer Durchtrittsöffnung für eine Welle in der zentralen Öffnung des die zentrale Durchtrittsöffnung aufweisenden Blechstanzteils angeordnet ist.

In weiter bevorzugter Ausgestaltung der Erfindung ist vorgesehen, dass die Begrenzungsscheibe im Abstand von der Lagerebene der Planetenräder angeordnet ist und an ihrem Außenrand Fortsätze zur Befestigung an den Blechstanzteilen aufweist.

In weiter bevorzugter Ausgestaltung der Erfindung ist vorgesehen, dass die Blechstanz- und -formteile zur Aussteifung mit Prägungen und/oder umgeformten Partien versehen sind.

In weiter bevorzugter Ausgestaltung der Erfindung ist vorgesehen, dass die Blechstanzteile eine die Lageröffnungen für die Achsbolzen der Planetenräder übergreifende Partie aufweisen.

In weiter bevorzugter Ausgestaltung der Erfindung sind Mittel zur Verdrehsicherung und gegen ein axiales Verschieben der Achsbolzen der Planetenräder vorgesehen.

Im Folgenden wird die Erfindung anhand von in der Zeichnung schematisch dargestellten Ausführungsbeispielen näher erläutert. Es zeigen
- Fig. 1: einen Querschnitt durch einen Lagerkäfig für ein Planetengetriebe; und
- Fig. 2: einen Querschnitt durch eine Variante des Lagerkäfigs für ein Planetengetriebe.

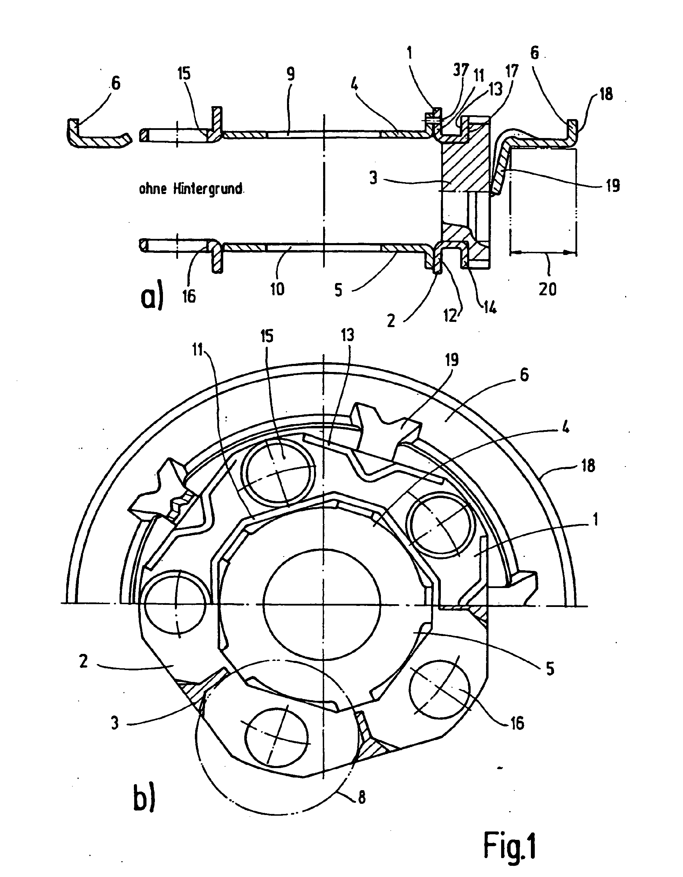

Das in Fig. 1 dargestellte Getriebe besteht im Wesentlichen aus einem Lagerkäfig mit zwei Blechstanzteilen 1, 2 und zwischen diesen angeordneten Abstandkörpem 3, wobei die Abstandskörper 3 als Y-förmige Säulen ausgebildet sind, deren verjüngtes Ende radial nach innen weist und die in ihren äußeren Seitenflanken Ausnehmungen aufweisen, um den Bauraum für den Planetenraddurchmesser zu vergrößern. Bei dem dargestellten Ausführungsbeispiel sind fünf derartige Abstandskörper 3 entsprechend der Anzahl der Planetenräder in gleichen Umfangsabständen angeordnet. Durch den Abstand benachbarter Abstandskörper 3 wird der maximale Planetenraddurchmesser 8 definiert. Die als Gleichteile ausgebildeten Blechstanzteile 1, 2 weisen eine zentrale, vieleckige Öffnung auf, von denen die eine für das Einsetzen des (nicht näher dargestellten) Sonnenrads bestimmt ist. In den Öffnungen sind Deckelbleche 4, 5 angeordnet, wobei das Deckelblech 5 beispielsweise mittels Punktschweißungen fest mit dem Blechstanzteil 2 verbunden ist, während das Deckelblech 4 mit dem Blechstanzteil 1 durch Verstiftungen 37 lösbar verbunden ist, um das Sonnenrad ein- oder ausbauen zu können. Die Deckelbleche 4, 5 weisen zentrale Durchtrittsöffnungen 9, 10 für den Durchtritt einer mit dem Sonnenrad verbundenen Welle bzw. zur Schaffung einer Zugänglichkeit des Sonnenrads für eine Axialspieleinstellung auf. Zwischen den Sonnenradstirnseiten und den Deckelblechen 4, 5 sind zur Axialspieleinstellung nicht näher dargestellte Anlaufscheiben eingelegt. Die Anlaufscheiben weisen eine der Vielecköffnung der Blechstanzteile 1, 2 entsprechende Außenkontur auf, so dass sie im Einbauzustand verdrehsicher montiert sind. Die Blechstanzteile 1, 2 weisen an ihrem Innenrand einen um 90° umgebogenen, durchgehenden Versteifungssteg 11, 12 und an ihrem Außenrand um 90° umgebogene Versteifungssegmente 13, 14 auf. Weiterhin sind in den Blechstanzteilen Lageröffnungen 15, 16 für Lagerbolzen der Planetenräder vorgesehen. Die Lageröffnungen 15, 16 werden gestanzt und über einen Dorn nach außen aufgeweitet, so dass sie einen Wulstrand erhalten, der eine gegenüber der Materialstärke des Blechstanzteils vergrößerte Führungshöhe für die Lagerbolzen ergibt.

Die Abstandskörper 3 weisen eine radial innen liegende Stufe 17 auf, an der die Blechstanzteile 1, 2 anliegen und mittels Punktschweißungen befestigt sind.

Im Bereich der Mittelebene des Getriebes ist ein Ringkörper 6 an den Abstandskörpem 3 befestigt, der für den Abtrieb des übertragenen Drehmoments bestimmt ist. Der radiale Außenrand 18 des Ringkörpers 6 kann beispielsweise mit einer Glockennabe eines Radlagers verbunden werden. Um einen hinreichenden Bauraum 20 für das Hohlrad zur Verfügung zu haben, ist der Ringkörper 6 axial nach außen versetzt und über schräg nach innen weisende Verbindungsarme 19 mit den Abstandskörpern 3 verbunden. Die Verbindungsarme 19 sind zur Aussteifung profiliert ausgebildet, so dass sie auch in radialer Richtung die erforderliche Stabilität aufweisen.

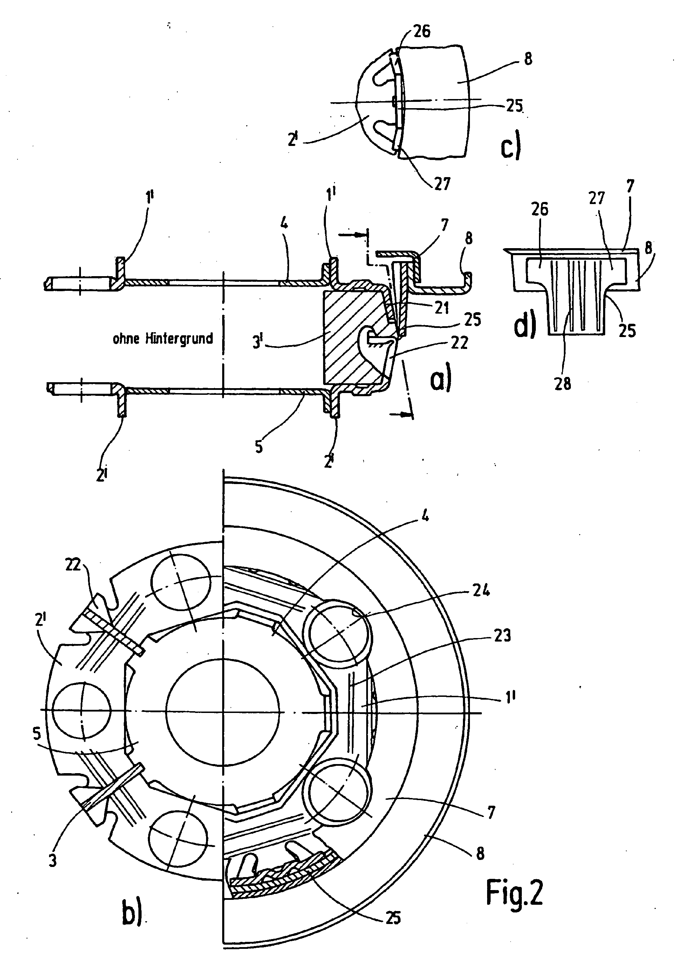

Bei dem in Fig. 2 dargestellten Ausführungsbeispiel sind die Abstandskörper 3' als ebene Blechkörper ausgebildet. Zur Befestigung der Blechstanzteile 1', 2' an den Abstandskörpern 3' weisen die Blechstanzteile zweifach abgebogene Arme 21, 22 auf, die an ihren freien Enden einen Schlitz aufweisen, in den die Abstandskörper 3' eingreifen. An der Abbiegung des freien Endes der Arme 21, 22 ist eine innen liegende Materialreduzierung vorgesehen, um ein spitzwinkliges Abbiegen zu ermöglichen, ohne dass ein zu großer äußerer Biegeradius entsteht. Die Arme 21, 22 sind mittels Punkt- und/oder Linienschweißungen an den Abstandskörpern 3' befestigt. Die Blechstanzteile 1', 2' weisen weiterhin zwischen den Lagerbohrungen Versteifungsrippen 23 auf.

Der in Fig. 2 dargestellte Ringkörper ist aus zwei Einzelringen 7, 8 zusammengesetzt, von denen der Ring 7 ein im Querschnitt gewinkeltes Profil und der Ring 8 ein im Querschnitt etwa U-förmiges Profil aufweist. Sowohl die Profilierung der Ringe als auch die Verwendung zweier Einzelringe erhöht die mechanische Stabilität des Ringkörpers. Grundsätzlich könnte auch ein einziger Ring entsprechender Stabilität verwendet werden. Der Ring 7 übergreift das Blechstanzteil 1' und weist im Bereich der Lageröffnungen für die Planetenradbolzen entsprechende Aussparungen 24 auf.

Die Verbindungsarme 25 sind nicht einstückig mit dem Ring ausgebildet, sondern als Profilbleche, die sowohl mit den Abstandskörpern 3' als auch mit dem Ring 8 verschweißt sind. Darüber hinaus sind die Verbindungsarme 25 auch mit den umgebogenen Armen 21, 22 der Blechstanzteile 1', 2' linienförmig verschweißt. Im Bereich ihrer Befestigung am Ring 8 weisen die Verbindungsarme 25 abgewinkelte Fortsätze 26, 27 auf, die an den runden Verlauf des Rings 8 angepasst sind. Zu ihrer Aussteifung sind auch die Verbindungsarme 25 mit einem Rippenprofil 28 versehen.

## Patentansprüche

1. Planetengetriebe, mit einem auf einer Antriebswelle angeordneten, außenverzahnten Sonnenrad, mit mehreren mit ihren Achsen auf einem Kreis um das Sonnenrad angeordneten, außenverzahnten und in einem Lagerkäfig um ihre Achsen drehbar gelagerten Planetenrädern, und mit einem koaxial zu dem Sonnenrad angeordneten, innenverzahnten und das Sonnenrad sowie die Planetenräder umschließenden Hohlrad, wobei die Verzahnung der Planetenräder sowohl mit der Verzahnung des Sonnenrads als auch mit der Verzahnung des Hohlrads in kämmendem Eingriff steht, wobei der Lagerkäfig zwei geformte, Lagerebenen für die Planetenräder definierende Blechstanzteile (1, 2; 1', 2') umfasst, zwischen denen Abstandskörper (3, 3') angeordnet sind, **dadurch gekennzeichnet, dass** ein das Hohlrad radial übergreifender Ringkörper (6; 7, 8) für den Abtrieb an den radial außen liegenden Bereichen der Abstandskörper (3, 3') im Bereich der Längsmittelebene zwischen den Lagerebenen und/oder an in den Bereich der Längsmittelebene ragende Partien (22) der Blechstanzteile befestigt ist.

2. Getriebe nach Anspruch 1, **dadurch gekennzeichnet, dass** die Abstandskörper (3, 3') in Umfangsrichtung in gleichen Winkelabständen angeordnet sind.

3. Getriebe nach Anspruch 1 oder 2, **dadurch gekennzeichnet, dass** die Abstandskörper als flache Plattenelemente (3') oder als Säulen (3) mit annähernd Y-förmigen Querschnitt ausgebildet sind.

4. Getriebe nach Anspruch 3, **dadurch gekennzeichnet, dass** die als Säulen (3) mit annähernd Y-förmigen Querschnitt ausgebildeten Abstandskörper im Laufbereich der Planetenräder seitliche Ausnehmungen und/oder eine radial innen liegende Stufe (17) aufweisen, an der die Blechstanzteile (1, 2) anliegen.

5. Getriebe nach einem der Ansprüche 1 bis 4, **dadurch gekennzeichnet, dass** der das Hohlrad radial übergreifende Ringkörper (6; 7, 8) für den Abtrieb an den radial außen liegenden Bereichen der Abstandskörper (3, 3') und/oder den in den Bereich der Längsmittelebene ragenden Partien (22) der Blechstanzteile angeschweißt ist.

6. Getriebe nach einem der Ansprüche 1 bis 5, **dadurch gekennzeichnet, dass** die Blechstanzteile (1, 2; 1', 2') und die Abstandskörper (3, 3') fest miteinander verbunden, vorzugsweise miteinander verschweißt, verschraubt, vernietet oder verklebt sind.

7. Getriebe nach einem der Ansprüche 1 bis 6, **dadurch gekennzeichnet, dass** der Ringkörper (6; 7, 8) als geformtes Blechstanzteil ausgebildet ist.

8. Getriebe nach einem der Ansprüche 1 bis 7, **dadurch gekennzeichnet, dass** der Ringkörper (6) eine der Anzahl der Abstandskörper (3, 3') entsprechende Anzahl an radial und axial nach innen ragende Verbindungsarme (19) aufweist, deren freie Enden mit den Abstandskörpern (3, 3') und/oder den in den Bereich der Längsmittelebene ragenden Partien (22) der Blechstanzteile (1', 2') verbunden sind.

9. Getriebe nach einem der Ansprüche 1 bis 6, **dadurch gekennzeichnet, dass** der Ringkörper mindestens einen Profilring (8) aufweist und dass an einer im Wesentlichen axial ausgerichteten Fläche des Profilrings (8) eine der Anzahl der Abstandskörper (3') entsprechende Anzahl von als Blechformteile ausgebildeten Verbindungsarmen (25) befestigt ist, deren freie Enden mit den Abstandskörpern verbunden sind.

10. Getriebe nach einem der Ansprüche 1 bis 9, **dadurch gekennzeichnet, dass** mindestens eines der den Lagerkäfig bildenden Blechstanzteile (1, 2; 1', 2') eine zentrale Öffnung für das Einführen des Sonnenrads aufweist.

11. Getriebe nach Anspruch 10, **dadurch gekennzeichnet, dass** eine Begrenzungsscheibe (4, 5) für das Sonnenrad mit einer Durchtrittsöffnung (9, 10) für eine Welle in der zentralen Öffnung des die zentrale Durchtrittsöffnung aufweisenden Blechstanzteils (1, 2; 1', 2') angeordnet ist.

12. Getriebe nach Anspruch 11, **dadurch gekennzeichnet, dass** die Begrenzungsscheibe (4, 5) im Abstand von der Lagerebene der Planetenräder angeordnet ist und an ihrem Außenrand Fortsätze zur Befestigung an den Blechstanzteilen (1, 2; 1', 2') aufweist.

13. Getriebe nach einem der Ansprüche 1 bis 12, **dadurch gekennzeichnet, dass** die Blechstanz- und -formteile (1, 2; 1', 2'; 25; 6; 7, 8) zur Aussteifung mit Prägungen (23, 28) und/oder umgeformten Partien (11, 13) versehen sind.

14. Getriebe nach einem der Ansprüche 1 bis 13, **dadurch gekennzeichnet, dass** die Blechstanzteile (1, 2; 1', 2') eine die Lageröffnungen (15, 16) für die Achsbolzen der Planetenräder übergreifende Partie aufweisen.

15. Getriebe nach einem der Ansprüche 1 bis 14, **gekennzeichnet durch** Mittel zur Verdrehsicherung der Achsbolzen der Planetenräder.

## Claims

1. Planetary gear set comprising a externally-toothed sun gear which is disposed on a drive shaft, comprising a plurality of externally-toothed planetary gears which are disposed on a circle surrounding the sun gear and which are rotatably borne about their axes in a housing, and comprising an internally-toothed ring gear which is disposed coaxially to the sun gear and which encompasses the sun gear and the planetary gears, wherein the teeth of the planetary gears are engaged with the teeth of the sun gear as well as of the ring gear, and wherein the housing comprises two formed, stamped sheet metal parts (1, 2; 1', 2') which define bearing planes for the planetary gears and between which spacer pieces (3, 3') are disposed, **characterized in that** a ring part (6; 7, 8) for the power take-off which radially surrounds the ring gear is attached to the radially outside portions of the spacer pieces (3, 3') in the region of the longitudinal center plane between the bearing planes and/or to portions (22) of the stamped sheet metal parts which extend to the region of the center plane.

2. Gear set according to claim 1, **characterized in that** the spacer pieces (3, 3') are disposed at equal circumferential distances from each other.

3. Gear set according to claim 1 or 2, **characterized in that** the spacer pieces are formed to be flat slabs (3') or columns (3) with an approximately Y-shaped cross section.

4. Gear set according to claim 3, **characterized in that** the spacer pieces formed to be columns (3) with an approximately Y-shaped cross section comprise lateral recesses in the region of the rotation of the planetary gears and/or a radially inside shoulder (17) at which the stamped sheet metal parts (1, 2) abut.

5. Gear set according to one of claims 1 to 4, **characterized in that** the ring part (6; 7, 8) for the power take-off which radially surrounds the ring gear is welded to the radially outside portions of the spacer pieces (3, 3') and/or to portions (22) of the stamped sheet metal parts which extend to the region of the center plane.

6. Gear set according to one of claims 1 to 5, **characterized in that** the stamped sheet metal parts (1, 2; 1', 2') and the spacer pieces (3, 3') are solidly attached to each other, preferably welded to each other, screwed together, riveted or glued.

7. Gear set according to one of claims 1 to 6, **characterized in that** the ring part (6; 7, 8) is formed to be a stamped sheet metal part.

8. Gear set according to one of claims 1 to 7, **characterized in that** the ring part (6) comprises a plurality of connecting legs (19), the number of which corresponds to the number of spacer pieces (3, 3') and which extend radially and axially inwards, the free ends of which are connected to the spacer pieces (3, 3') and/or to portions (22) of the stamped sheet metal parts which extend to the region of the center plane.

9. Gear set according to one of claims 1 to 6, **characterized in that** the ring part comprises at least one profiled ring (8) and **in that** a plurality of connecting legs (25) corresponding to the number of spacer pieces (3') and formed as sheet metal parts is connected to an essentially axially oriented surface of the profiled ring (8), the free ends of the legs being connected to the spacer pieces.

10. Gear set according to one of claims 1 to 9, **characterized in that** at least one of the stamped sheet metal parts (1, 2; 1', 2') which form the housing has a central opening for passing through the sun gear.

11. Gear set according to claim 10, **characterized in that** a retaining disc (4, 5) for the sun gear with an opening for the passing through of a shaft is disposed is the central opening of the stamped sheet metal part (1, 2; 1', 2') having the central opening.

12. Gear set according to claim 11, **characterized in that** the retaining disc (4, 5) is disposed at a distance from the bearing plane of the planetary gears and that is has tabs at its circumference for connecting it to the stamped sheet metal parts (1, 2; 1', 2').

13. Gear set according to one of claims 1 to 12, **characterized in that** the stamped and formed sheet metal parts (1, 2; 1', 2'; 25; 6; 7, 8) are provided with embossments (23, 28) and/or deformed portions as a stiffening measure.

14. Gear set according to one of claims 1 to 13, **characterized in that** the stamped sheet metal parts (1, 2; 1', 2') comprise a portion which extends over the bearing bores (15, 16) for the shafts of the planetary gears.

15. Gear set according to one of claims 1 to 14, **characterized by** means for preventing a rotation of the shafts of the planetary gears.

## Revendications

1. Engrenage planétaire comprenant une roue solaire à denture extérieure disposée sur un arbre d'entraînement, comprenant plusieurs roues planétaires à denture extérieure disposées avec leurs axes sur un cercle autour de la roue solaire et montées tournantes autour de leur axe dans une cage de roulement, et comprenant une couronne à denture intérieure disposée coaxialement à la roue solaire et entourant la roue solaire ainsi que les roues planétaires, la denture des roues planétaires étant en prise par engrènement aussi bien avec la denture de la roue solaire qu'avec la denture de la couronne, la cage de roulement comprenant deux pièces découpées en tôle (1, 2 ; 1', 2') mises en forme, définissant des plans de roulement pour les roues planétaires, entre lesquelles sont disposés des corps d'écartement (3, 3'), **caractérisé en ce qu'**un corps annulaire (6 ; 7, 8) pour la sortie, dépassant radialement de la couronne, est fixé aux régions radialement extérieures des corps d'écartement (3, 3') dans la région du plan médian longitudinal entre les plans de roulement et/ou à des parties (22) des pièces découpées en tôle s'étendant dans la région du plan médian longitudinal.

2. Engrenage selon la revendication 1, **caractérisé en ce que** les corps d'écartement (3, 3') sont disposés avec les mêmes écarts angulaires en direction circonférentielle.

3. Engrenage selon la revendication 1 ou 2, **caractérisé en ce que** les corps d'écartement sont réalisés sous la forme d'éléments plats de type plaque (3') ou de colonnes (3) avec une section approximativement en Y.

4. Engrenage selon la revendication 3, **caractérisé en ce que** les corps d'écartement réalisés sous la forme de colonnes (3) à section approximativement en Y présentent dans la zone de roulement des roues planétaires des évidements latéraux et/ou un gradin (17) radialement intérieur contre lequel les pièces découpées en tôle (1, 2) s'appliquent.

5. Engrenage selon l'une des revendications 1 à 4, **caractérisé en ce que** le corps annulaire (6 ; 7, 8) pour la sortie, dépassant radialement de la couronne, est soudé aux régions radialement extérieures des corps d'écartement (3, 3') et/ou aux parties (22) des pièces découpées en tôle s'étendant dans la région du plan médian longitudinal.

6. Engrenage selon l'une des revendications 1 à 5, **caractérisé en ce que** les pièces découpées en tôle (1, 2 ; 1', 2') et les corps d'écartement (3, 3') sont reliés ensemble de manière fixe, de préférence soudés, vissés, rivetés ou collés ensemble.

7. Engrenage selon l'une des revendications 1 à 6, **caractérisé en ce que** le corps annulaire (6 ; 7, 8) est réalisé sous la forme d'une pièce découpée en tôle mise en forme.

8. Engrenage selon l'une des revendications 1 à 7, **caractérisé en ce que** le corps annulaire (6) présente un nombre correspondant au nombre de corps d'écartement (3, 3') de bras de liaison (19) s'étendant radialement et axialement vers l'intérieur, dont les extrémités libres sont reliées aux corps d'écartement (3, 3') et/ou aux parties (22) des pièces découpées en tôle (1', 2') s'étendant dans la région du plan médian longitudinal.

9. Engrenage selon l'une des revendications 1 à 6, **caractérisé en ce que** le corps annulaire présente au moins une bague profilée (8) et qu'à une surface orientée essentiellement axialement de la bague profilée (8) est fixé un nombre correspondant au nombre de corps d'écartement (3') de bras de liaison (25) réalisés sous la forme de pièces façonnées en tôle dont les extrémités libres sont reliées aux corps d'écartement.

10. Engrenage selon l'une des revendications 1 à 9, **caractérisé en ce qu'**au moins une des pièces découpées en tôle (1, 2 ; 1', 2') formant la cage de roulement présente une ouverture centrale pour l'introduction de la roue solaire.

11. Engrenage selon la revendication 10, **caractérisé en ce qu'**une rondelle de butée (4, 5) pour la roue solaire présentant une ouverture de passage (9, 10) pour un arbre est disposée dans l'ouverture centrale de la pièce découpée en tôle (1, 2 ; 1', 2') présentant l'ouverture de passage centrale.

12. Engrenage selon la revendication 11, **caractérisé en ce que** la rondelle de butée (4, 5) est disposée à distance du plan de roulement des roues planétaires et présente sur son bord extérieur des prolongements pour la fixation aux pièces découpées en tôle (1, 2 ; 1', 2').

13. Engrenage selon l'une des revendications 1 à 12, **caractérisé en ce que** les pièces découpées et façonnées en tôle (1, 2 ; 1', 2' ; 25 ; 6 ; 7, 8) sont pourvues pour le renforcement d'estampages (23, 28) et/ou de parties déformées (11, 13).

14. Engrenage selon l'une des revendications 1 à 13, **caractérisé en ce que** les pièces découpées en tôle (1, 2 ; 1', 2') présentent une partie dépassant des ouvertures de logement (15, 16) pour les axes des roues planétaires.

15. Engrenage selon l'une des revendications 1 à 14, **caractérisé par** des moyens pour le blocage en rotation des axes des roues planétaires.
